# EUROPÄISCHE PATENTSCHRIFT

(11) **EP 0 523 415 B1**
(45) Veröffentlichungstag und Bekanntmachung des Hinweises auf die Patenterteilung: **22.05.1996**
(21) Anmeldenummer: 92110690.2
(22) Anmeldetag: 25.06.1992
(51) Int. Cl.: B05B 15/12

(54) **Lackabscheide- und -rückgewinnungsverfahren für wasserverdünnbare Lacke bei Spritzkabinen sowie Anlagensystem zur Verfahrensdurchführung**
Process for the separation and recovery of water dilutable paints from spray booths and installation for carrying out this process
Procédé de séparation et de récupération pour peintures diluables à l'eau dans les cabines de pulvérisation ainsi que le système d'installation pour la mise en oeuvre du procédé

(30) Priorität: 13.07.1991 DE 4123296
(43) Veröffentlichungstag der Anmeldung: 20.01.1993
(73) Patentinhaber: EISENMANN MASCHINENBAU KG (Komplementär: EISENMANN-Stiftung), D-71002 Böblingen (DE)
(72) Erfinder: Schmid, Karl, W-7030 Böblingen (DE); Wilhelm, Friedrich, Dr., W-7031 Gärtringen (DE)
(74) Vertreter: Seemann, Norbert W., Dipl.-Ing.

(56) Entgegenhaltungen:
- WO-A-91/09666
- DE-A- 2 353 469
- US-A- 4 607 592
- PATENT ABSTRACTS OF JAPAN vol.12, no.75 (C-480)9. März 1988;& JP A6 2 211400 (KANSAI PAINT CO LTD) 17 September 1987.

## Beschreibung

Die vorliegende Erfindung bezieht sich auf ein Verfahren nach dem Oberbegriff des Patentanspruchs 1 sowie auf ein Anlagensystem zur Durchführung dieses Verfahrens.

Als vorbekannter Stand der Technik bezüglich des vorliegenden Verfahrens wird ein Verfahren gemäß der DE-OS 34 28 300 der gleichen Anmelderin, welches in der Zeit seit der dortigen Anmeldung immer mehr an Bedeutung gewonnen hat, sowie die WO 91/09666 A1 genannt, wobei letztere ein Verfahren aufzeigt, das u.a. auch eine diskontinuierliche Entnahme von Teilmengen aus dem Umlaufwasserkreislauf, deren Zuleitung in ein Eindicksystem sowie das Ersetzen der entnommenen Teilmengen durch in dem Eindicksystem gewonnenem, gereinigten Wasser gestattet.

Des weiteren ist der zuvor beschriebene, vorbekannte Verfahrensablauf vom Grunde her zumindest teilweise auch aus der US-PS 4,607,592 bekannt. Dort werden zudem noch Mittel und Maßnahmen zur Abscheidung von Overspray aus der Abluft außerhalb der Spritzkabine dargelegt.

Dementsprechend ist es auch Aufgabe der vorliegenden Erfindung, das bereits bekannte Grundverfahren der Verwendung von vollentsalztem Nasser als Umlauf- und Berieselungsflüssigkeit des jeweiligen Spritz-Kabinen-Systems für die mannigfachen Erfordernisse des praktischen Einsatzes verfahrens- und anlagenmäßig weiter auszugestalten sowie zu optimieren.

Die Lösung dieser Aufgabe ist den Patentansprüchen in Verbindung mit der Verfahrensskizze und der zugehörigen Detailbeschreibung des anmeldegemäßen Verfahrens samt Anlagenkonzeption zu entnehmen.

Die Skizze veranschaulicht dabei rein schematisch die wesentlichsten Elemente eines Anlagenaufbaus zur Verfahrensdurchführung, mit dem speziellen Ziel der Rückgewinnung des Oversprays bei Spritzapplikation und Einsatz von wasserverdünnbaren Lacken.

Der dargestellte Spritzraum kann dabei vollkommen geschlossen oder mit seitlichen Öffnungen für den kontinuierlichen Transport von Werkstücken durch den Kabinenraum versehen sein und die Zuführung der Frischluft über die Filterdecke bzw. bei Handspritzbetrieb in der Weise erfolgen, daß der Spritzer ständig in einem Frischluftstrom arbeitet. Alle Flächen des Spritzraumes, die mit dem Spritzstrahl bzw. Spritznebel in Kontakt kommen sind wasserberieselt und die Absaugung erfolgt in bekannter Weise über schlitzförmige Öffnungen im Bodenbereich oder zwischen Boden und Kabinenrückwand im Venturiprinzip mit hoher Strömungsgeschwindigkeit und intensiver Vermischung des Wasser-Luftstromes. Neben einer ersten Abscheidung des Oversprays aus dem am jeweiligen Werkstück vorbeigehenden Spritzstrahl beim Aufprall desselben an den berieselten Wand- und/oder Bodenflächen erfolgt eine weitere Abscheidung durch Anordnung einer zusätzlichen wand- oder bodenseitigen Prallfläche hinter der Venturidüse.

Danach erfolgt das Sammeln der von der Prallfläche abströmenden Flüssigkeit in einer Rinne und Ableitung in einen Vorratsbehälter, der gleichzeitig als Pumpvorlage dient. Die Sammelrinne ist dabei so ausgeführt, daß mehrere Vorratsbehälter angeschlossen werden können und jeder Behälter einen bestimmten Lack bzw. Farbton zugeordnet wird. Weiterhin ist jeder Vorratsbehälter mit einer Pumpe ausgerüstet, um die Wasserumwälzung für das Lackabscheidesystem durchzuführen.

Als Umwälzflüssigkeit wird hierbei ausschließlich vollentsalztes Wasser verwendet. Vor jeder längeren Stillstandsphase des Lackabscheiders oder bei Lackwechsel muß das gesamte System gespült werden. Dazu wird aus einem Spülwasservorratsbehälter mittels separater Spülwasserpumpe das gesamte System mit VE-Wasser geflutet, nachdem die vorherige Flüssigkeitsumwälzung abgeschaltet und das System sich in den entsprechenden Vorratsbehälter entleert hat. Das verschmutzte Spülwasser wird ebenfalls in diesen Lackwasservorratsbehälter geleitet.

Zur Rückgewinnung des Lackmaterials wird eine Teilmenge aus einem der Lackwasservorratsbehälter, die durch Overspray einen Festkörpergehalt von ca. 1-15 % erreicht hat, in eine Eindickanlage gepumpt und durch vollentsalztes Frischwasser ersetzt. Es ist zweckmäßig, die Entnahme vor einem Spülvorgang durchzuführen, so daß der Vorratsbehälter mit dem Spülwasser aufgefüllt wird.

Die Eindickanlage kann z. B. eine Ultrafiltrationseinrichtung oder eine Verdampfung sein. Die Eindickung erfolgt im sogenannten Batch verfahren bis der Festkörpergehalt des Konzentrates in etwa dem des ursprünglichen Lackmaterials entspricht.

Das fertige Konzentrat wird mit Neulack vermischt und der Verschnitt kann für einen neuen Beschichtungsvorgang angesetzt werden. Das Verhältnis von Konzentrat zu Neulack ist abhängig vom Anteil des Oversprays; bei hohem Overspray und entsprechend hohem Konzentratanteil kann es erforderlich sein, daß gewisse Additive, z. B. zur Erhöhung der Thixotropie, zugesetzt werden müssen. Das bei der Eindickung noch anfallende Permeat bei der Ultrafiltration bzw. Kondensat bei der Verdampfung wird in den Spülwasserbehälter zurückgeführt und damit über den Spülvorgang der Kreislauf geschlossen.

Die Zuluft zum Spritzraum muß darüberhinaus klimatisiert sein, d. h. die Luftfeuchte muß innerhalb eines bestimmten Bereichs liegen, in dem eine zu starke Antrocknung des Spritznebels vermieden wird und keine Beschichtungsfehler durch eine zu starke Verdünnung auftreten.

Zur Verbesserung der Partikelabscheidung aus dem Abluftstrom wird hinter dem Lackabscheider letztlich noch ein Nachabscheider angeordnet, z. B. ein Aerosolwäscher oder ein Elektrofilter oder ein Trockenschichtfilter.
Besonders wichtig bei dieser Verfahren- bzw. Anlagengestaltung ist zudem noch, daß die Eindickung entweder einstufig oder in hintereinander geschalteten Stufen mit unterschiedlichen Ultrafiltrationsmodulen bzw. als Kombination von Ultrafiltration und Verdampfung durchgeführt wird; da jedes Ultrafiltrations- bzw. Verdampfermodul stets für einen ganz bestimmten Bereich optimal geeignet ist, kann man somit allein im praktischen Betrieb anfallenden Erfordernissen mit ein und derselben Anlage gerecht werden.

Als weiter wesentliche Verfahrensmerkmale und Anlagenbauteile sind noch zu betrachten, daß bei der Eindickung über eine entsprechende Temperaturregeleinrichtung eine Lacktemperierung erfolgt zur Verhinderung von Schaumbildung, biologischen oder thermischen Abbauvorgängen und somit zur Qualitätssicherung, Viskositätseinstellung u.dgl., und daß im Lackabscheider ggf. eine dosierte Zugabe von Chemikalien, Bioziden und sonstigem erfolgt, z. B. zum Zwecke der Entschäumung.

Letztlich kann es bei dem zuvor beschriebenen Konzept noch von Vorteil sein, wenn zur Reduzierung der sogenannten Scherkräfte auf den jeweils verwendeten Lack das Eindicksystem mit einer Verdrängerpumpe ausgestattet und dem Eindicksystem eine Temperaturregeleinrichtung zugeordnet ist und wenn der Lackabscheider eine dosierbare Chemikalienzugabevorrichtung aufweist.

### Bezugszeichenaufstellung

- 1: Spritzkabine
- 2: Kabinenrückwand
- 3: Boden
- 4: Frischluft
- 5: Prallwand, Prallfläche
- 6: Rinne
- 7: Wasservorratsbehälter
- 8: Nachabscheider
- 9: Tropfenabscheider
- 10: Abluftstrom
- 11: Eindicksystem, Lackabscheider
- 12: Vorratsbehälter
- 13: Lackvorratsbehälter
- 14: Konzentrat
- 15: Teilmenge
- 16: gereinigtes Wasser
- 17: Venturidüse
- 18: Umlaufwasser (-kreislauf)
- 19: Neulack

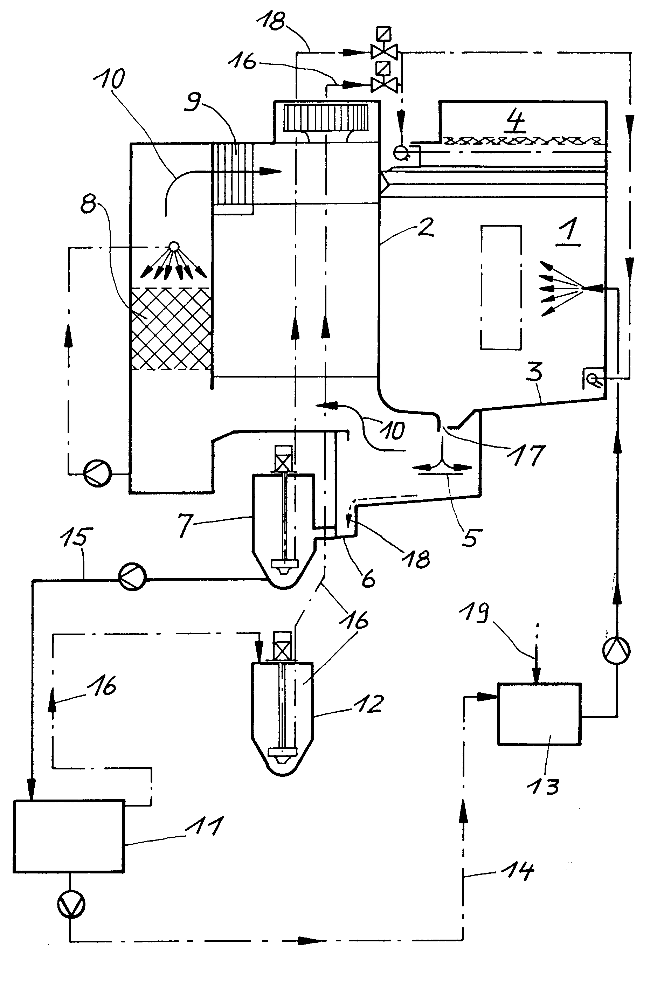

## Patentansprüche

1. Lackabscheide- und -rückgewinnungsverfahren für wasserverdünnbare Lacke bei wasserberieselten Spritzkabinen, mit Naßabscheidung der Farbnebel aus der Kabinenluft und Kreislaufführung des anfallenden Lack-Wassergemisches zum Zwecke der Eindickung in einem mindestens eine Ultrafiltrationsstufe aufweisenden Eindicksystem (11), wobei als Umlauf- und Berieselungsflüssigkeit des Kabinensystems vollentsalztes Wasser verwendet wird, wobei von dem für die Berieselung der Spritzkabine (1) vorgesehenen Umlaufwasser (18) in Intervallen eine Teilmenge (15) aus dem im Umlaufwasserkreislauf angeordneten Wasservorratsbehälter (7) in das Eindicksystem (11) zur Aufkonzentrierung bis zum Festkörpergehalt des Ausgangslackmaterials gepumpt und die entnommene Menge durch das vollentsalzte, gereinigte Wasser (16) aus dem vom Eindicksystem (11) gespeisten Spülwasserbehälter (12) ersetzt wird,
**gekennzeichnet durch**
folgende Verfahrensschritte, bei denen in Kombination vorgesehen ist, daß:
a) die Entnahme der Teilmenge (15) jedoch spätestens bei einem Oversprayanteil von max 15 % erfolgt,
b) der Zyklus der Teilmengeentnahme (15) so gewählt ist, daß er vor jedem Lackwechsel oder vor einer längeren Anlagenstillsetzung erfolgt, wobei die VE-Wasserzugabe gleichzeitig als Spülvorgang für das Lackabscheidesystem dient, und
c) bei der Eindickung über eine entsprechende Temperaturregeleinrichtung eine Lacktemperierung erfolgt zur Verhinderung von Schaumbildung, thermischen oder biologischen Abbauvorgängen und somit zur Qualitätssicherung, wie Viskositätseinstellung u. dgl. Parameter.

2. Verfahren nach Anspruch 1,
**dadurch gekennzeichnet,**
daß
a) das Lackabscheidesystem vorzugsweise vor einer längeren Anlagenstillsetzung gespült und als Spülmedium das bei der Eindickung separierte, vollentsalzte, gereinigte Wasser (16) verwendet wird, unter Zusatz von VE-Wasser bedingt durch Verdunstungsverluste im Lackabscheider,
b) im Lackabscheider eine dosierte Zugabe von Mitteln zum Zwecke der Entschäumung, wie Chemikalien oder Bioziden, erfolgt.

3. Verfahren nach Anspruch 1 oder 2,
**dadurch gekennzeichnet,**
daß die Eindickung im Eindicksystem (11) durch Ultrafiltration und nachfolgender Verdampfung vorgenommen wird.

4. Verfahren nach Anspruch 3,
**dadurch gekennzeichnet,**
daß die Ultrafiltration einstufig erfolgt.

5. Verfahren nach Anspruch 3,
**dadurch gekennzeichnet,**
daß die Ultrafiltration in hintereinander geschalteten Stufen mit unterschiedlichen Ultrafiltrationsmodulen erfolgt.

6. Anlagensystem zur Durchführung des Verfahrens nach den Ansprüchen 1 bis 5, bestehend aus folgenden Bauteilen:
a) einer Spritzkabine (1), deren Spritzraum-Begrenzungswände und deren -Boden, insbesondere die mit Farbnebel und Spritzstrahlen in Berührung kommenden Flächen mit Wasser berieselt werden und die Kabinenzuluft von oben oder der Absaugung entgegengesetzt eingeblasen wird, vorteilhafterweise über Filter,
b) einer Absaugöffnung im Boden oder zwischen Boden und Rückwand,
c) einer Wassersammelrinne für das Rieselwasser, die mit mindestens einem Wasservorratsbehälter (7) verbunden ist, und
d) einem Eindicksystem zur Aufkonzentrierung des mit Overspray-Lack angereicherten Umlaufwassers
**gekennzeichnet durch**
die Kombination folgender Elemente:
e) die Absaugöffnung in der Spritzkabine (1) ist als Venturiedüse (17) ausgebildet, der ein Entspannungsraum mit Prallwand (5) folgt,
f) der Wasservorratsbehälter (7) ist direkter Bestandteil des Umlaufwasserkreislaufes (18) und weist eine Wasserumwälzpumpe auf,
g) das mindestens eine Ultrafiltrationsstufe aufweisende Eindicksystem (11) weist eine Temperaturregeleinrichtung auf und ist direkt mit dem im Umlaufwaserkreislauf (18) angeordneten Wasservorratsbehälter (7) verbunden, wobei in dieser Verbindung an sich bekannte Mittel zur Steuerung der Intervalle für die Zufuhr der Teilmenge (15) des Umlaufwassers (18) zum Eindicksystem (11) vorgesehen sind,
h) alle berieselten Flächen sind derart glatt und ohne Vertiefung etc. ausgebildet, daß nirgends Flüssigkeit stehen bleiben kann,
i) es ist ein Wasserführungssystem vorhanden, das so aufgebaut ist, daß es nach dem Abschalten der Pumpe der Lackabscheider (11) vollständig in den jeweiligen Vorratsbehälter leerlaufen kann,
j) für das Spülsystem ist ein separater Vorratsbehälter (12) mit Pumpenaggregat vorgesehen und
k) es ist eine Steuerung zur Wasserführung vorgesehen, die den Spülvorgang so steuert, daß das verschmutzte Wasser in den jeweils zugeordneten Wasservorratsbehälter läuft.

7. Anlagensystem nach Anspruch 6,
**dadurch gekennzeichnet,**
daß mehrere Wasservorratsbehälter (7) vorgesehen sind, die je ein Pumpenaggregat, das zum Lackabscheider (11) hin abgesperrt werden kann, aufweisen.

8. Anlagensystem nach den Ansprüchen 6 und 7,
**dadurch gekennzeichnet,**
daß zur Reduzierung der sogenannten Scherkräfte auf den jeweils verwendeten Lack das Eindicksystem mit einer Verdängerpumpe ausgestattet ist und der Lackabscheider eine dosierbare Chemikalienzugabevorrichtung aufweist.

9. Anlagensystem nach einem der Ansprüche 6 bis 8,
**dadurch gekennzeichnet,**
daß im Eindicksystem (11) der Ultrafiltrationsstufe ein Verdampfer nachgeschaltet ist.

10. Anlagensystem nach Anspruch 9,
**dadurch gekennzeichnet,**
daß die Ultrafiltrationsstufe aus hintereinander geschalteten Stufen mit unterschiedlichen Ultrafiltrationsmodulen besteht.

## Claims

1. Method of paint separation and recovery for water thinnable paints in spray booths with water scrubbing, with wet separation of the paint mist from the booth air and circuit guidance of the precipitating paint/water mixture for the purpose of concentrating in a concentrating system (11) having at least one ultrafiltration stage, wherein fully desalinated water is used as circulation and scrubbing liquid of the booth system, wherein a partial quantity (15) of the circulation water (18) provided for the scrubbing of the spray booth (1) is pumped at intervals out of the water reservoir tank (7), which is arranged in the circulation water circuit, into the concentrating system (11) for concentration to solid body content of the basic paint material and the removed quantity is replaced by the fully desalinated, purified water (16) from the rinsing water tank (12) supplied by the concentrating system (11), characterised by following method steps, by which in combination is provided that:
a) the removal of the partial quantity (15) is nevertheless effected at the latest in the case of an overspray proportion of at most 15%,
b) the cycle of the removal of the partial quantity (15) is so selected that it takes place before each paint change or before a longer standstill of the plant, wherein the addition of fully desalinated water serves at the same time as a rinsing process for the paint separation system, and
c) during the concentrating a paint cooling is effected by way of an appropriate temperature regulating equipment for prevention of foam formation, thermal or biological decomposition processes and thus for quality assurance, such as viscosity setting and like parameters.

2. Method according to claim 1, characterised thereby that
a) the paint separating system is rinsed preferably before a longer plant standstill and the fully desalinated, purified water (16) separated in the concentrating is used as rinsing medium with addition of fully desalinated water due to evaporation losses in the paint separator,
b) a metered addition of media for the purpose of deaeration, such as chemicals or biozides,is carried out in the paint separator.

3. Method according to claim 1 or 2, characterised thereby that the concentrating in the concentrating system (11) is undertaken by ultrafiltration and subsequent volatilisation.

4. Method according to claim 3, characterised thereby that the ultrafiltration takes place in a single stage.

5. Method according to claim 3, characterised thereby that the ultrafiltration takes place in stages, which are connected one after the other, with different ultrafiltration modules.

6. Plant system for performance of the method according to claims 1 to 5, consisting of the following components:
a) a spray booth (1), the spray chamber boundary walls and floor of which are scrubbed with water, particularly the surfaces coming into contact with paint mist and spray jets, and the booth air is blown in from above or the extraction conversely, preferably by way of filters,
b) an extraction opening in the floor or between floor and back wall,
c) a water collecting channel for the scrubbing water, which is connected with a water reservoir tank (7), and
d) a concentrating system for concentration of the circulation water enriched with overspray paint,
characterised by the combination of the following elements:
e) the extraction opening in the spray booth (1) is constructed as a venturi nozzle (17), which follows an expansion chamber with a baffle (5),
f) the water reservoir tank (7) is a direct component of the circulation water circuit (18) and comprises a water circulating pump,
g) the concentrating system (11), which comprises at least one ultrafiltration stage, has a temperature regulating equipment and is directly connected with the water reservoir tank (7) arranged in the circulation water circuit (18), wherein means, which are known per se, for control of the invervals for the feeding of the partial quantity (15) of the circulation water (18) to the concentrating system (11) are provided in this connection,
h) all scrubbed surfaces are constructed to be smooth and free of depression, etc., in such a manner that no liquid at all can be left,
i) a water feed system is preent, which is so constructed that it can completely empty into the respective reservoir tank after switching-off of the pump of the paint separator (11),
j) a separate reservoir tank (12) with pump unit is provided for the rinsing system and
k) a control for the water feed is provided and so controls the rinsing process that the contaminated water runs into the respectively associated water reservoir tank.

7. Plant system according to claim 6, characterised thereby that several water reservoir tanks (7) are provided and each comprise a pump unit which can be blocked towards the paint separator (11).

8. Plant system according to claims 6 and 7, characterised thereby that, for reduction of the so-called shearing stresses on the respectively used paint, the concentrating system is equipped with a positive-displacement pump and the paint separator comprises a chemical supplementing device which can be metered.

9. Plant installation according to one of claims 6 to 8, characterised thereby that an evaporator is connected behind the ultrafiltration stage in the concentrating system (11).

10. Plant installation according to claim 9, characterised thereby that the ultrafiltration stage consists of stages, which are connected one behind the other, with different ultrafiltration modules.

## Revendications

1. Procédé de séparation et de récupération de peinture pour des peintures diluables dans l'eau dans des cabines de pulvérisation arrosées d'eau, avec séparation par voie humide du brouillard de peinture hors de l'air de la cabine et guidage en circuit du mélange obtenu de peinture et d'eau aux fins d'épaississement dans un système d'épaississement (11) présentant au moins un étage d'ultrafiltration, de l'eau entièrement déminéralisée étant utilisée comme liquide de circulation et d'arrosage du système de cabine, une quantité partielle (15) de l'eau mise en circulation (18) prévue pour l'arrosage de la cabine de pulvérisation (1) étant pompée par intervalles, à partir du réservoir de stockage d'eau (7) disposé dans le circuit de circulation d'eau, dans le système d'épaississement (11) aux fins de concentration jusqu'à la teneur en corps solides de la peinture initiale, et la quantité soutirée étant remplacée par l'eau entièrement déminéralisée épurée (16) provenant du réservoir d'eau de rinçage (12) alimenté par le système d'épaississement (11), **caractérisé** par des étapes de procédé selon lesquelles il est prévu, en combinaison, que :
a) le soutirage de la quantité partielle (15) s'effectue toutefois au plus tard en présence d'une teneur en excédent de peinture pulvérisée ("overspray") de 15 % au maximum,
b) le cycle du soutirage de la quantité partielle (15) est choisi de telle sorte qu'il s'effectue avant chaque changement de peinture ou avant une longue immobilisation de l'installation, l'addition d'eau entièrement déminéralisée servant simultanément de processus de rinçage pour le système de séparation de peinture,
c) lors de l'épaississement, un équilibrage de la température de la peinture est effectué, au moyen d'un dispositif correspondant de régulation de température, afin d'empêcher la formation de mousse et des processus de décomposition biologiques ou thermiques et donc pour l'assurance de la qualité, ainsi que le réglage de la viscosité et autres paramètres analogues.

2. Procédé selon la revendication 1, **caractérisé** en ce que
a) le système de séparation de peinture est de préférence rincé avant une longue immobilisation de l'installation et on utilise comme fluide de rinçage l'eau entièrement déminéralisée épurée (16) séparée lors de l'épaississement, avec addition d'eau entièrement déminéralisée du fait des pertes par évaporation dans le séparateur de peinture,
b) on effectue dans le séparateur de peinture une addition dosée d'agents antimoussants, tels que des produits chimiques ou des biocides.

3. Procédé selon la revendication 1 ou 2, **caractérisé** en ce que l'épaississement dans le système d'épaississement (11) est effectué par ultrafiltration suivie d'une évaporation.

4. Procédé selon la revendication 3, **caractérisé** en ce qu'on effectue une ultrafiltration à un étage.

5. Procédé selon la revendication 3, **caractérisé** en ce qu'on effectue une ultrafiltration à plusieurs étages reliés en série, avec des modules d'ultrafiltration différents.

6. Structure d'installation pour la mise en oeuvre du procédé selon les revendications 1 à 5, constituée des éléments de construction suivants:
a) une cabine de pulvérisation (1), dont les parois de délimitation ainsi que le fond de la chambre de pulvérisation, notamment les surfaces entrant en contact avec du brouillard de peinture et des jets pulvérisés, sont arrosées d'eau, tandis que l'air d'alimentation de la cabine est insufflé par le haut ou à l'opposé de l'évacuation par aspiration, de préférence par l'intermédiaire de filtres,
b) une ouverture d'évacuation par aspiration dans le fond ou entre le fond et la paroi arrière,
c) une rigole collectrice d'eau pour l'eau d'arrosage, qui est reliée à au moins un réservoir de stockage d'eau (7), et
d) un système d'épaississement pour la concentration de l'eau mise en circulation enrichie d'excédent de peinture pulvérisée ("overspray"),
**caractérisée** par la combinaison des éléments suivants :
e) l'ouverture d'évacuation par aspiration dans la cabine de pulvérisation (1) est réalisée sous la forme d'un venturi (17), qui est suivi d'une chambre de détente avec paroi déflectrice (5),
f) le réservoir de stockage d'eau (7) fait directement partie du circuit de circulation d'eau (18) et présente une pompe de circulation d'eau,
g) le système d'épaississement (11), présentant au moins un étage d'ultrafiltration, présente un dispositif de régulation de température et est directement relié au réservoir de stockage d'eau (7) disposé dans le circuit de circulation d'eau (18), des moyens en soi connus pour la commande des intervalles pour l'apport de la quantité partielle (15) de l'eau mise en circulation (18) au système d'épaississement (11) étant prévus dans cette liaison,
h) toutes les surfaces arrosées sont réalisées lisses et sans renfoncements, etc., de telle sorte qu'il ne peut y avoir nulle part du liquide qui reste figé,
i) un système de guidage d'eau est présent qui est conçu de telle sorte qu'à la suite de l'arrêt de la pompe, le séparateur de peinture (11) peut se vider totalement dans le réservoir de stockage respectif,
j) un réservoir de stockage séparé (12) avec un équipement de pompage est prévu pour le système de rinçage, et
k) une commande est prévue pour le guidage de l'eau, qui commande le processus de rinçage de telle sorte que l'eau souillée s'écoule dans le réservoir de stockage d'eau respectivement associé.

7. Structure d'installation selon la revendication 6, **caractérisée** en ce que plusieurs réservoirs de stockage d'eau (7) sont prévus, qui présentent chacun un équipement de pompage qui peut être isolé vers le séparateur de peinture (11).

8. Structure d'installation selon les revendications 6 et 7, **caractérisée** en ce qu'afin de réduire les forces dites de cisaillement sur la peinture respectivement utilisée, le système d'épaississement est équipé d'une pompe volumétrique et le séparateur de peinture présente un dispositif d'addition dosable de produits chimiques.

9. Structure d'installation selon une des revendications 6 à 8, **caractérisée** en ce qu'un évaporateur est relié à la suite de l'étage d'ultrafiltration dans le système d'épaississement (11).

10. Structure d'installation selon la revendication 9, **caractérisée** en ce que l'étage d'ultrafiltration est constitué de plusieurs étages reliés en série, avec des modules d'ultrafiltration différents.
